# EUROPEAN PATENT SPECIFICATION

(11) **EP 3 789 216 B1**
(45) Date of publication and mention of the grant of the patent: **28.12.2022**
(21) Application number: 20190475.2
(22) Date of filing: 11.08.2020
(51) Int. Cl.: B60C 15/04

(54) **PNEUMATIC TIRE**
LUFTREIFEN
PNEUMATIQUE

(30) Priority: 03.09.2019 JP 2019160673
(43) Date of publication of application: 10.03.2021
(73) Proprietor: Sumitomo Rubber Industries, Ltd., Kobe-shi, Hyogo-ken 651-0072 (JP)
(72) Inventor: KONO, Kyosuke, Kobe-shi, Hyogo 651-0072 (JP)
(74) Representative: Manitz Finsterwald Patent- und Rechtsanwaltspartnerschaft mbB

(56) References cited:
- EP-A1- 0 631 889
- EP-A1- 0 729 853
- WO-A1-2019/107253
- US-B1- 6 422 280

## Description

### BACKGROUND OF THE INVENTION

### Field of the Invention

The present invention relates to a pneumatic tire.

### Description of the Background Art

Japanese Laid-Open Patent Publication No. 2012-162204 discloses a pneumatic tire that includes: a bead core embedded in each bead portion; and a carcass ply turned up around the bead core. The bead core is formed by aligning one or a plurality of cords in a plurality of rows in the tire width direction and winding the cords in a plurality of stages in the tire radial direction in an overlapping manner, and the number of the cords aligned in the tire width direction is gradually decreased toward the outer side in the tire radial direction.

In the pneumatic tire of Japanese Laid-Open Patent Publication No. 2012-162204, there is room for improvement in high-speed stability during cornering (hereinafter, sometimes referred to simply as "high-speed stability").
A pneumatic tire in accordance with the preamble of claim 1 is known from US 6 422 280 B1. Related tires are known from WO 2019/107253 A1, EP 0 631 889 A1 and EP 0 729 853 A1.

The present invention has been made in view of the above circumstances, and a main object of the present invention is to provide a pneumatic tire that can have improved high-speed stability.

### SUMMARY OF THE INVENTION

The present invention is directed to a pneumatic tire including: a pair of bead portions in each of which a bead core is embedded; and a carcass including a carcass ply extending on and between the bead cores, wherein, in a tire meridian cross-section, the bead core includes a bead wire extending in a tire circumferential direction, in a tire meridian cross-section, the bead core includes a core outer portion in which the bead wire is stacked so as to form a tapered shape toward an outer side in a tire radial direction, and a center line that bisects a taper angle of the core outer portion is inclined toward an outer side in a tire axial direction while extending toward the outer side in the tire radial direction.

In the pneumatic tire according to the present invention, an angle of the center line relative to a line along the tire radial direction is preferably 5 to 25°.

In the pneumatic tire according to the present invention, in a tire meridian cross-section, the bead core preferably includes a core inner portion that is located inward in the tire radial direction of the core outer portion and in which the bead wire is stacked so as to form a tapered shape toward an inner side in the tire radial direction.

In the pneumatic tire according to the present invention, preferably, the bead core has an inner end in the tire axial direction, an outer end in the tire axial direction, a bead core maximum width portion connecting the inner and outer ends, and an inner end in the tire radial direction, and a ratio Hmax/H of a maximum width height Hmax that is a height in the tire radial direction from an intermediate position of the bead core maximum width portion to the inner end in the tire radial direction, to a maximum height H in the tire radial direction of the bead core is 20% to 80%.

In the pneumatic tire according to the present invention, preferably, the bead core has an inner end in the tire axial direction, an outer end in the tire axial direction, a bead core maximum width portion connecting the inner and outer ends, and an inner end in the tire radial direction, and a distance in the tire radial direction between an intermediate position of the bead core maximum width portion and a bead bottom surface is not less than 1.5 times a maximum width height Hmax that is a height in the tire radial direction from the intermediate position of the bead core maximum width portion to the inner end in the tire radial direction.

In the pneumatic tire according to the present invention, the carcass ply includes a main body portion extending between the bead cores, and turned-up portions turned up around the bead cores from the inner side to the outer side in the tire axial direction, the main body portion and each of the turned-up portions form a closed region surrounding the bead core, by contact thereof at the outer side in the tire radial direction with respect to the bead core, the closed region includes a first region occupied by the bead core, and a second region outward in the tire radial direction of the first region, and, in a tire meridian cross-section, an area of the second region is not less than 0.1 times an area of the first region.

In the pneumatic tire according to the present invention, in the bead portion, a rubber having a complex elastic modulus not less than 3.0 MPa is preferably disposed in a core-below region that is a region inward in the tire radial direction of the bead core.

In the pneumatic tire according to the present invention, in a tire meridian cross-section, an area of the core-below region is preferably not less than 30% of an area of the bead core.

In the pneumatic tire according to the present invention, preferably, the carcass ply includes turned-up portions turned up around the bead cores from the inner side to the outer side in the tire axial direction, an outer rubber is provided outward in the tire axial direction of each of the turned-up portions, and a rubber gauge of the outer rubber at a position corresponding to an outer end in the tire radial direction of the bead core is not greater than 2 times a rubber gauge of the outer rubber at a position corresponding to an outer end in the tire axial direction of the bead core.

In the pneumatic tire according to the present invention, a difference (B-A) between a bead base diameter B of the pneumatic tire and a rim diameter A of a normal rim to which the pneumatic tire is mounted is preferably 0.5 to 1.5 mm.

In the pneumatic tire according to the present invention, preferably, each of the turned-up portions has a turned-up portion profile specified by a center line of a carcass cord, the turned-up portion profile is convex inward in the tire axial direction, and a radius of curvature of a single circular arc determined from three points at an outer end in the tire axial direction of the bead core, an outer end in the tire radial direction of the bead core, and a position away from the outer end in the tire radial direction of the bead core by a height in the tire radial direction of the bead core is not less than 1.0 times a maximum width of the bead core.

The pneumatic tire according to the present invention includes: a pair of bead portions in each of which a bead core is embedded; and a carcass including a carcass ply extending on and between the bead cores. In a tire meridian cross-section, the bead core includes a core outer portion in which the bead wire is stacked so as to form a tapered shape toward the outer side in the tire radial direction, and a center line that bisects a taper angle of the core outer portion is inclined toward the outer side in the tire axial direction while extending toward the outer side in the tire radial direction. The core outer portion affects the inclination of the carcass ply extending on and between the bead cores. When the tapered core outer portion is inclined in the above-described direction as in the present invention, the carcass ply extending on and between the bead cores can be inclined (tilted) so as to extend in a direction closer to the tire axial direction. Such a carcass ply can sufficiently bend when lateral force acts on the tire during cornering, and serves to enhance the lateral spring of the tire. Therefore, the pneumatic tire according to the present invention can have improved high-speed stability.

### BRIEF DESCRIPTION OF THE DRAWINGS

FIG. 1 is a cross-sectional view of a normal rim and the pneumatic tire according to the present invention;
FIG. 2 is an enlarged view of a bead portion in FIG. 1;
FIG. 3 is an enlarged view of the bead portion in FIG. 1;
FIG. 4 is an enlarged view of the bead portion in FIG. 1;
FIG. 5 is an enlarged view of the bead portion in FIG. 1; and
FIG. 6 is an enlarged view of the bead portion in FIG. 1.

### DESCRIPTION OF THE PREFERRED EMBODIMENTS

Hereinafter, an embodiment of the present invention will be described with reference to the drawings.

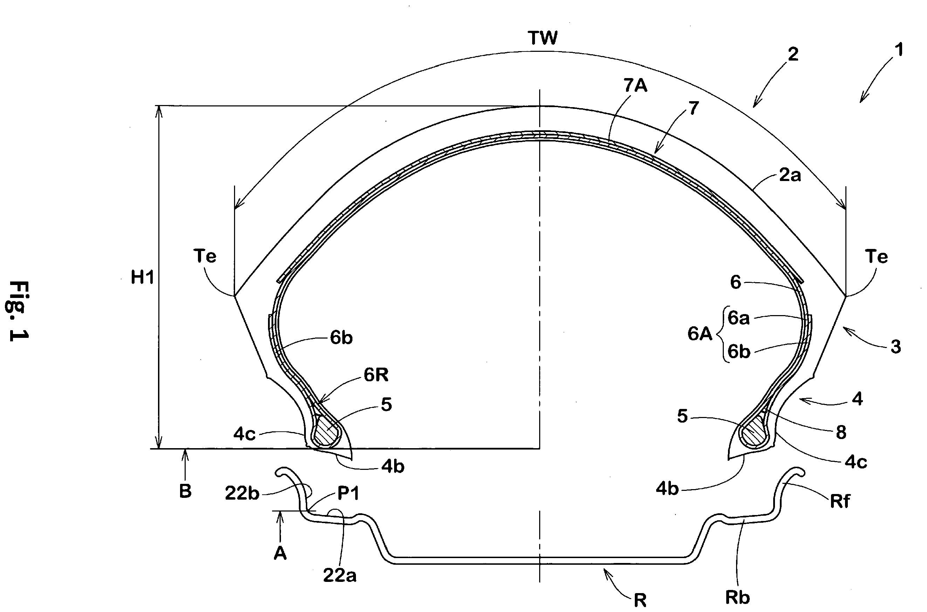

FIG. 1 is a tire meridian cross-sectional view of a pneumatic tire (hereinafter, sometimes referred to simply as "tire") 1 according to the present embodiment, in a normal state, including a tire rotation axis (not shown). FIG. 1 shows, for example, a tire 1 for a motorcycle. However, the present invention can also be applied to a tire 1 for a passenger car, a heavy-duty vehicle, or the like.

The "normal state" is a state where the tire 1 is mounted on a normal rim R and inflated to a normal internal pressure and no load is applied to the tire 1. In the present description, unless otherwise specified, dimensions and the like of components of the tire 1 are values measured in the normal state.

The "normal rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 includes a tread portion 2, a pair of sidewall portions 3 connected to both ends of the tread portion 2 and extending inward in the tire radial direction, and a pair of bead portions 4 connected to the sidewall portions 3 and extending inward in the tire radial direction. A bead core 5 is embedded in each bead portion 4 of the present embodiment.

In the present embodiment, the tread portion 2 has a tread surface 2a extending between tread ends Te, Te of the tread portion 2 so as to be curved in an arc shape that is convex outward in the tire radial direction such that a sufficient contact area is obtained even during cornering at a large camber angle. The development length of the tread surface 2a is a tread development width TW.

The tire 1 according to the present embodiment includes a carcass 6 extending on and between the bead cores 5, and a tread reinforcing layer 7 disposed outward of the carcass 6 in the tire radial direction and inside the tread portion 2.

The carcass 6 is formed of, for example, one carcass ply 6A. The carcass ply 6A is formed, for example, by covering, with a topping rubber (not shown), carcass cords aligned so as to be inclined at an angle of 75 to 90° relative to the tire circumferential direction.

The carcass ply 6A includes, for example, a main body portion 6a and turned-up portions 6b. The main body portion 6a, for example, extends between the bead cores 5. Each turned-up portion 6b is, for example, connected to the main body portion 6a and turned up around the bead core 5 from the inner side to the outer side in the tire axial direction.

The carcass ply 6A forms a closed region 6R surrounding each bead core 5, by contact between the main body portion 6a and the turned-up portion 6b at the outer side in the tire radial direction with respect to the bead core 5. In the closed region 6R of the present embodiment, the bead core 5 and a hard bead apex rubber 8 extending from the bead core 5 in a tapered shape are disposed.

The tread reinforcing layer 7 is composed of at least one or more band plies in which reinforcing cords composed of, for example, steel cords, are aligned so as to be inclined, for example, at an angle of 0 to 40 degrees relative to a tire equator C. In the present embodiment, the tread reinforcing layer 7 is composed of one band ply 7A. The development width (not shown) of the band ply 7A is preferably about 80% to 95% of the tread development width TW.

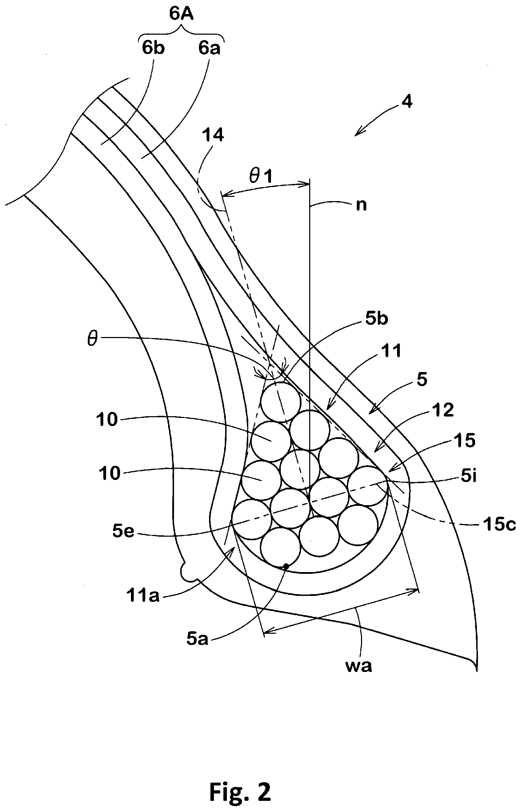

FIG. 2 is an enlarged view of the bead portion 4. As shown in FIG. 2, the bead core 5 is formed so as to include a bead wire 10 extending in the tire circumferential direction. The bead core 5 is formed, for example, by continuously winding one bead wire 10 around the tire rotation axis a plurality of turns.

In the present embodiment, the bead core 5 includes a core outer portion 12 in which the bead wire 10 is stacked so as to form a tapered shape toward the outer side in the tire radial direction. In addition, a center line 14 that bisects a taper angle θ of the core outer portion 12 is inclined toward the outer side in the tire axial direction while extending toward the outer side in the tire radial direction. Accordingly, the carcass ply 6A, which extends on and between the bead cores 5, can be inclined (tilted) so as to extend in a direction closer to the tire axial direction. Such a carcass ply 6A can sufficiently bend when lateral force acts on the tire 1 during cornering, and thus serves to enhance the lateral spring of the tire 1. Therefore, the tire 1 according to the present embodiment has improved high-speed stability.

In the present embodiment, the bead core 5 has an inner end 5i in the tire axial direction, an outer end 5e in the tire axial direction, an inner end 5a in the tire radial direction, and an outer end 5b in the tire radial direction. The bead core 5 includes, for example, a bead core maximum width portion 15 connecting the inner end 5i in the tire axial direction and the outer end 5e in the tire axial direction. In the present description, a width wa of the bead core 5 is measured parallel to a virtual straight line 15c connecting the inner end 5i in the tire axial direction and the outer end 5e in the tire axial direction.

The bead core 5 is formed by providing a plurality of wire rows 11, in which the bead wire 10 is aligned along the direction of the bead core maximum width portion 15, in the tire radial direction. In the present embodiment, the bead core 5 is formed such that the number of the bead wires 10 in each wire row 11 is continuously decreased from a wire row 11a forming the bead core maximum width portion 15, toward the outer side in the tire radial direction and toward the inner side in the tire radial direction.

An angle θ1 of the center line 14 relative to a line n along the tire radial direction is preferably 5 to 25°. If the angle θ1 is less than 5°, the carcass ply 6A extends in a direction close to the tire radial direction, and cannot sufficiently bend when lateral force acts. If the angle θ1 is greater than 25°, the carcass ply 6A is greatly tilted, and vertical spring decreases, so that high-speed stability may deteriorate.

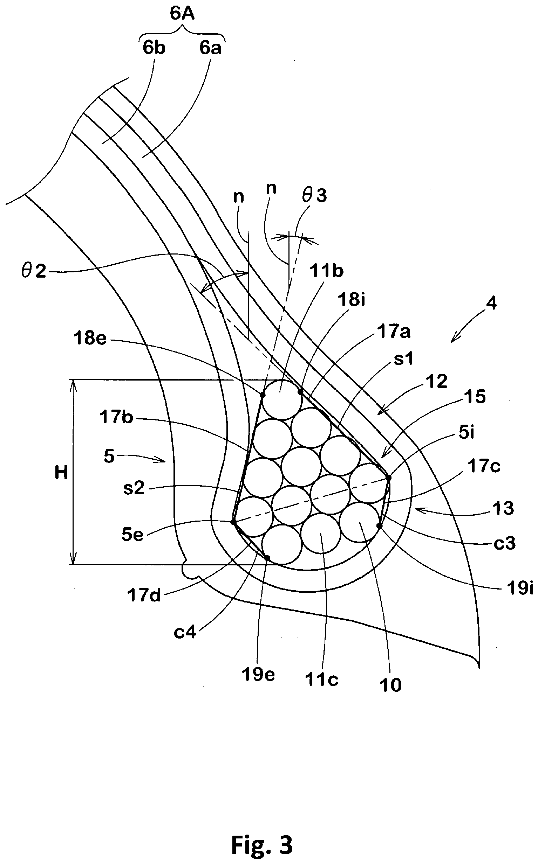

FIG. 3 is an enlarged view of the bead portion 4. As shown in FIG. 3, in the present embodiment, the core outer portion 12 is a portion outward in the tire radial direction with respect to the bead core maximum width portion 15. The taper angle θ of the core outer portion 12 is specified by a first inner surface 17a of the bead core 5 extending from the inner end 5i outward in the tire radial direction and a first outer surface 17b of the bead core 5 extending from the outer end 5e outward in the tire radial direction. In the present embodiment, the first inner surface 17a is specified by a straight line s1 connecting the inner end 5i of the bead core 5 and an inner end 18i in the tire axial direction of a wire row 11b disposed at the outermost side in the tire radial direction. In the present embodiment, the first outer surface 17b is specified by a straight line s2 connecting the outer end 5e of the bead core 5 and an outer end 18e in the tire axial direction of the wire row 11b disposed at the outermost side in the tire radial direction.

Although not particularly limited, an angle θ2 of the first inner surface 17a relative to a line n along the tire radial direction is, for example, preferably 35 to 55°. An angle θ3 of the first outer surface 17b relative to a line n along the tire radial direction is, for example, preferably 5 to 25°. Accordingly, the carcass ply 6A can be caused to sufficiently bend during cornering, and the lateral spring of the tire 1 can be enhanced.

In the present embodiment, the bead core 5 includes a core inner portion 13 that is located inward in the tire radial direction of the core outer portion 12 and in which the bead wire 10 is stacked so as to form a tapered shape toward the inner side in the tire radial direction. Such a core inner portion 13 inhibits an excessive increase in tightening force of the bead portion 4 to the rim R, and thus improves fitting performance (ease of fitting to the rim R).

The core inner portion 13 is specified by a second inner surface 17c of the bead core 5 extending from the inner end 5i inward in the tire radial direction and a second outer surface 17d of the bead core 5 extending from the outer end 5e inward in the tire radial direction. In the present embodiment, the second inner surface 17c is specified by a straight line c3 connecting the inner end 5i of the bead core 5 and an inner end 19i in the tire axial direction of a wire row 11c disposed at the innermost side in the tire radial direction. In the present embodiment, the second outer surface 17d is specified by a straight line c4 connecting the outer end 5e of the bead core 5 and an outer end 19e in the tire axial direction of the wire row 11c disposed at the innermost side in the tire radial direction.

A maximum height H in the tire radial direction of the bead core 5 is preferably 3% to 15% of a tire cross-sectional height (shown in FIG. 1) HI. Such a bead core 5 enhances the stiffness of the bead portion 4 while inhibiting an excessive increase in the mass of the tire 1, and improves high-speed stability and ride comfort. The maximum height H of the bead core 5 is the distance in the tire radial direction between the inner end 5a and the outer end 5b of the bead core 5.

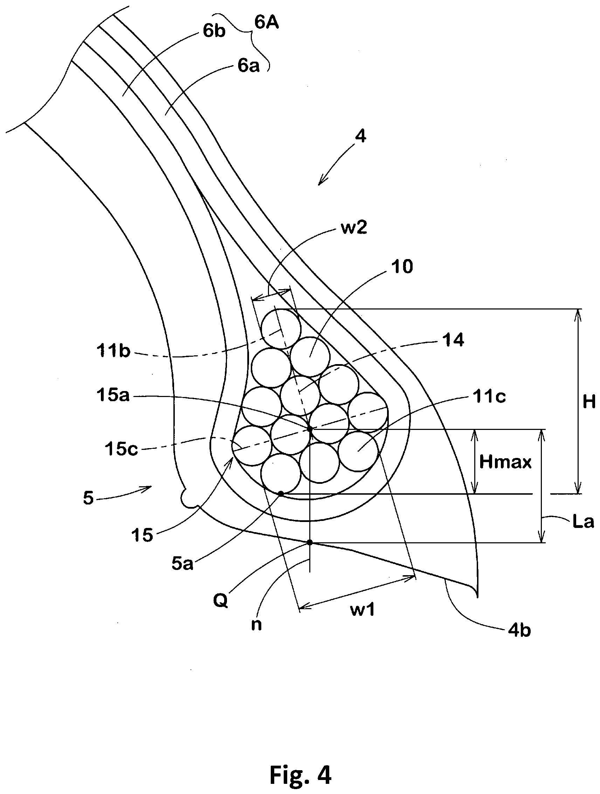

FIG. 4 is an enlarged view of the bead portion 4. As shown in FIG. 4, the ratio Hmax/H of a maximum width height Hmax that is a height in the tire radial direction from an intermediate position 15a of the bead core maximum width portion 15 to the inner end 5a in the tire radial direction of the bead core 5, to the maximum height H of the bead core 5, is preferably 20% to 80%. If the ratio Hmax/H is less than 20%, or if the ratio Hmax/H is greater than 80%, the carcass ply 6A, which extends around the bead core 5, easily forms a bent portion, an arc portion having a small radius of curvature, or the like, and air is likely to remain between the bead core 5 and the carcass ply 6A. From these viewpoints, the ratio Hmax/H is more preferably not less than 30% and further preferably not less than 35%, and more preferably not greater than 70% and further preferably not greater than 65%.

A distance La in the tire radial direction between the intermediate position 15a of the bead core maximum width portion 15 and a bead bottom surface 4b is preferably not less than 1.5 times the maximum width height Hmax. Accordingly, the bead core 5 can be disposed relatively at the outer side in the tire radial direction, and thus the carcass ply 6A can be inclined so as to extend in a direction closer to the tire axial direction. In addition, the thickness (rubber gauge) of the rubber disposed in a region inward in the tire radial direction of the bead core 5 can be ensured, and thus fittability and rim detachment resistance can be enhanced in a well-balanced manner. Although not particularly limited, the distance La is preferably not greater than 2.5 times the maximum width height Hmax when the shape of the bead portion 4 is taken into consideration. The distance La is the distance between the intermediate position 15a and a point of intersection Q of the bead bottom surface 4b and a line n, along the tire radial direction, passing through the intermediate position 15a.

A width w1 of the wire row 11c disposed at the innermost side in the tire radial direction is preferably greater than 2 times a width w2 of the wire row 11b disposed at the outermost side in the tire radial direction. Such a bead core 5 can increase the fitting pressure to the rim R to maintain rim detachment resistance at a high level. In addition, the mass of the bead core 5 of the present embodiment is reduced, and thus ride comfort is enhanced. Although not particularly limited, the width w1 of the wire row 11c disposed at the innermost side in the tire radial direction is preferably not greater than 4 times the width w2 of the wire row 11b disposed at the outermost side in the tire radial direction. The width of the wire row 11 is the maximum length parallel to the virtual straight line 15c.

In the present embodiment, the bead core 5 is formed in a pentagonal shape. In addition, the bead core 5 of the present embodiment has a line symmetrical shape with respect to the center line 14. Such a bead core 5 inhibits so-called ply loosing, in which the carcass ply 6A is separated from the bead core 5, to maintain high-speed stability at a high level. The shape of the bead core 5 is not limited to a pentagonal shape, and may be, for example, a hexagonal shape or an elliptical shape.

The bead core 5 may include a wrapping layer (not shown) that forms the outer periphery of the bead core 5 in order to inhibit the bead wire 10 from becoming loose. As the wrapping layer, various layers such as a rubber layer formed from only a rubber material, and a canvas layer formed from a rubberized canvas fabric are adopted as appropriate.

The bead wire 10 is not particularly limited as long as the bead wire 10 is a nonstretchable wire. The bead wire 10 is preferably, for example, a steel wire composed of a single wire or a steel cord obtained by twisting a plurality of steel filaments. The wire diameters (not shown) of the steel wire and the steel cord are each preferably about 0.8 to 1.8 mm. In addition, the bead wire 10 is preferably rubberized.

The bead wire 10 of the present embodiment has a circular transverse cross-sectional shape. The transverse cross-sectional shape of the bead wire 10 is not limited to such a mode, and may be a polygonal shape including a hexagonal shape.

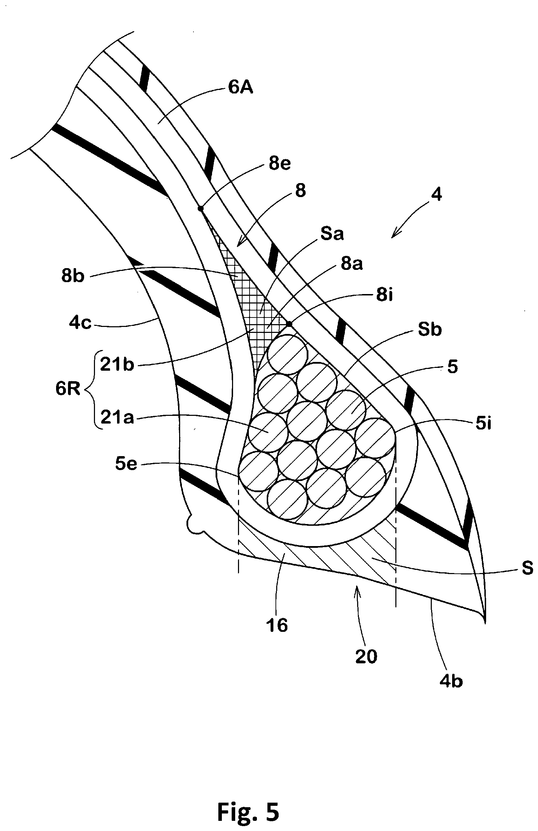

FIG. 5 is an enlarged view of the bead portion 4. As shown in FIG. 5, the closed region 6R includes a first region 21a occupied by the bead core 5, and a second region 21b outward in the tire radial direction of the first region 21a. The bead apex rubber 8 is disposed in the second region 21b of the present embodiment. The first region 21a occupied by the bead core 5 has higher stiffness than the second region 21b in which the bead apex rubber 8 is disposed. In order to inhibit an excessive increase in the stiffness of the closed region 6R and improve fittability, an area Sa of the second region 21b is not less than 0.1 times an area Sb of the first region 21a. In order to inhibit a decrease in the stiffness of the closed region 6R and improve rim detachment resistance, the area Sa of the second region 21b is preferably not greater than 5 times the area Sb of the first region 21a. For the sake of convenience, in FIG. 5, the first region 21a and the second region 21b are distinguished by different hatches.

The bead apex rubber 8 of the present embodiment is formed from a hard rubber. In the present embodiment, a known mode is adopted as appropriate for the bead apex rubber 8.

The bead apex rubber 8 is formed, for example, in a triangular shape. In the present embodiment, the bead apex rubber 8 is formed of an inner portion 8a and an outer portion 8b connected outward in the tire axial direction of the inner portion 8a. The inner portion 8a has, for example, a length, in the tire radial direction, increasing continuously from an inner end 8i in the tire axial direction toward the outer side in the tire axial direction. The outer portion 8b has a length, in the tire radial direction, increasing continuously from an outer end 8e in the tire axial direction toward the inner side in the tire axial direction.

In the present embodiment, in the bead portion 4, a rubber 16 having a complex elastic modulus E^{∗} not less than 3.0 MPa is disposed in a core-below region 20 that is a region inward in the tire radial direction of the bead core 5. Such a rubber 16 enhances the stiffness of the core-below region 20 to increase the bead tightening force, and thus maintains rim detachment resistance at a high level. If the bead tightening force excessively increases, fittability may deteriorate. Thus, the complex elastic modulus E^{∗} of the rubber 16 is preferably not greater than 20 MPa. In the present description, the core-below region 20 is a portion that is between the inner end 5i and the outer end 5e in the tire axial direction of the bead core 5 and is inward in the tire radial direction with respect to the carcass ply 6A.

In the present description, the complex elastic modulus is a value measured according to the standard of JIS-K6394 under the following conditions using a viscoelasticity spectrometer manufactured by Iwamoto Seisakusho.
Initial strain: 10%
Amplitude: ±2%
Frequency: 10 Hz
Deformation mode: tension
Temperature: 70°C

In the present embodiment, the entirety of the core-below region 20 is formed of the rubber 16. In the present embodiment, the rubber 16 forms the bead bottom surface 4b and a bead outer surface 4c connected to the bead bottom surface 4b and extending in the tire radial direction. The bead outer surface 4c includes a portion that comes into contact with a rim flange portion Rf (shown in FIG. 1) of the rim R. The core-below region 20 does not have to be a region in which only such a rubber 16 is disposed, and, for example, the rubber 16 and a chafer (not shown) composed of a fabric and a rubber with which the fabric is impregnated may be disposed in the core-below region 20 so as to be stacked in the tire radial direction.

An area S of the core-below region 20 is preferably not less than 30% of the area of the bead core 5, that is, the area Sb of the first region 21a in the present embodiment. Accordingly, rim detachment resistance is maintained at a high level. In order to enhance rim detachment resistance and fittability in a well-balanced manner, the area S of the core-below region 20 is preferably not greater than 100% of the area Sb of the first region 21a.

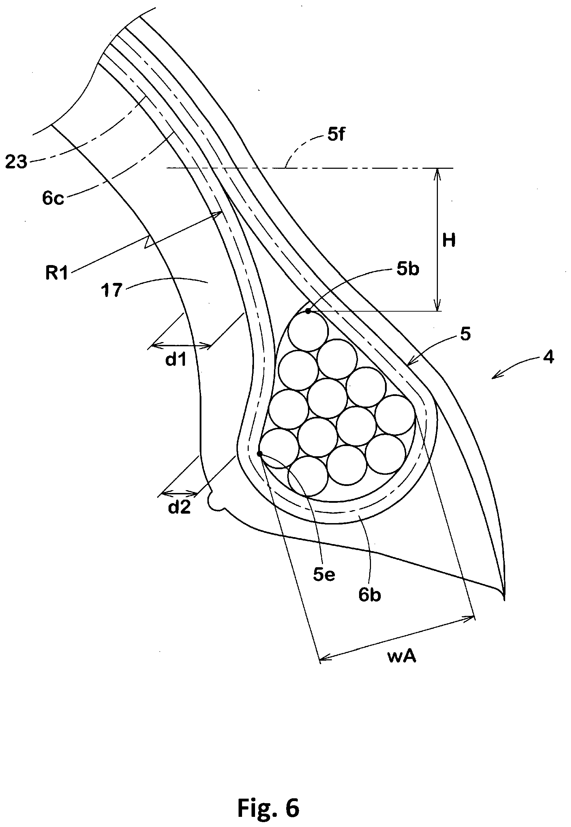

FIG. 6 is an enlarged view of the bead portion 4. As shown in FIG. 6, in the present embodiment, an outer rubber 17 is provided outward in the tire axial direction of the turned-up portion 6b. A rubber gauge d1 of the outer rubber 17 of the present embodiment at a position corresponding to the outer end 5b in the tire radial direction of the bead core 5 is preferably not greater than 2 times a rubber gauge d2 of the outer rubber 17 at a position corresponding to the outer end 5e in the tire axial direction of the bead core 5. Such an outer rubber 17 inhibits the carcass ply 6A from bending slightly toward the inner side in the tire axial direction and ensures sufficient bending of the carcass ply 6A during cornering, thereby maintaining high-speed stability. In order to ensure desired stiffness at the position corresponding to the outer end 5b in the tire radial direction of the bead core 5 at which a large load acts, the rubber gauge d1 is preferably not less than 0.8 times the rubber gauge d2.

In the present embodiment, the outer rubber 17 is formed as the rubber 16. The outer rubber 17 is not limited to such a mode, and may be formed of a rubber different from the rubber 16.

The turned-up portion 6b forms a turned-up portion profile 23 specified by a center line 6c of the carcass cord. By adopting the bead core 5 as in the present embodiment, the turned-up portion profile 23 is formed so as to be convex inward in the tire axial direction such that a radius of curvature R1 of a single circular arc is not less than 1.0 times a maximum width wa of the bead core 5. In the turned-up portion 6b having such a radius of curvature R1, buckling, due to a load, of a portion extending from the outer end 5e in the tire axial direction of the bead core 5 toward the outer side in the tire radial direction is inhibited, and thus high-speed stability is further enhanced. The single circular arc is determined from three points at the position of the outer end 5e in the tire axial direction of the bead core 5, the position of the outer end 5b in the tire radial direction of the bead core 5, and a position 5f away from the outer end 5b in the tire radial direction of the bead core 5 by the maximum height H in the tire radial direction of the bead core 5.

The difference (B-A) between a bead base diameter B (shown in FIG. 1) of such a tire 1 and a rim diameter A of the normal rim R to which the tire 1 is mounted is preferably 0.5 to 1.5 mm. Accordingly, rim detachment resistance and fittability are ensured in a well-balanced manner. In the present description, the rim diameter A is defined as a diameter at a point of intersection PI of an extension line of a contact surface 22a of a rim base portion Rb of the rim R and an extension line of a contact surface 22b of the rim flange portion Rf. In addition, the bead base diameter B is the diameter of the tire 1 on the bead bottom surface 4b at the position in the tire axial direction of the point of intersection PI before rim mounting.

In the case where the tire 1 according to the present embodiment is used for a motorcycle, the tire 1 is preferably used at the rear wheel at the drive side in order to enhance high-speed stability. The tire 1 according to the present embodiment may also be used, for example, at the front wheel.

Although the particularly preferred embodiment of the present invention has been described in detail above, the present invention is not limited to the above-described embodiment, and various modifications can be made to practice the present invention within the scope of the claims.

### EXAMPLES

Pneumatic tires for a motorcycle having the basic structure in FIG. 1 with a size of 180/55ZR17 were produced as test tires on the basis of specifications in Table 1. Each test tire was tested for high-speed stability, ride comfort, fittability, and rim detachment resistance. The common specifications and the test methods for the respective test tires are as follows.

### <High-Speed Stability/Ride Comfort>

Each test tire was mounted to the rear wheel of a motorcycle having an engine displacement of 900 cc, under the following conditions. A test rider drove the test vehicle on a test course that was a circuit track having a dry asphalt road surface. The test rider made sensory evaluation for ride comfort and high-speed stability regarding responsiveness, stiffness feeling, grip force, stability, and transient characteristics at this time. The results are represented with 5 points being defined as a maximum score, and a higher value indicates a better result. A commercially available tire was mounted on the front wheel.
Front wheel: 120/70ZR17
Rim: MT3.50x 17 (front wheel), MT5.50x 17 (rear wheel)
Internal pressure: 250 KPa (front wheel), 290 KPa (rear wheel)

### <Fittability/Rim Detachment Resistance>

A tester mounted each test tire to a rim. The tester made sensory evaluation for easiness of the rim mounting work at this time. In addition, the tester removed the rim from the test tire mounted on the rim. The tester made sensory evaluation for difficulty of removing the rim at this time. The results are indicated, for both fittability and rim detachment resistance, by scores with Comparative Example 1 being regarded as 100. A higher value indicates a better result. The internal structures of the test tires are shown in Table 1. In addition, the test results are shown in Table 2. "Kevlar" in Example 9 in Table 2 is a registered trademark. Moreover, "θ1" in Table 2 is defined as being positive in the case of the direction of inclination toward the outer side in the tire axial direction while extending toward the outer side in the tire radial direction.

**[Table 1]**

| Test tire | | Front wheel | Rear wheel |
|---|---|---|---|
| Carcass ply | Material | Nylon | Nylon |
| | Cord thickness | 2/1840 dtex | 2/1400 dtex |
| | Angle | 70 | 90 |
| | Number of plies | 2 | 1 |
| | Turned-up structure | 2-0 structure | 1-0 structure |
| | Turned-up end | 45 mm, 20 mm from bead base | 55 mm from bead base |
| Band ply | Material | Steel | Steel |
| | Configuration | 3^{∗}3 0.17 JLB | 3^{∗}3 0.17 JLB |
| | Angle | 0 | 0 |
| | Band width | 0.9×TW | 0.9×TW |
| | Ends near tire equator | 24 | 24 |
| Bead apex rubber | Height | 35 mm | - |

**[Table 2]**

| | Comparative Example 1 | Comparative Example 2 | Example 1 | Example 2 | Example 3 | Example 4 | Example 5 | Example 6 | Example 7 | Example 8 | Example 9 |
|---|---|---|---|---|---|---|---|---|---|---|---|
| θ1 (degree) | 0 | 0 | 15 | 15 | 15 | 15 | 15 | 30 | 15 | 15 | 15 |
| H (mm) | 8 | 8 | 8 | 8 | 8 | 8 | 8 | 8 | 8 | 8 | 8 |
| Hmax (mm) | 1 | 3 | 3 | 3 | 3 | 3 | 3 | 3 | 3 | 3 | 3 |
| Bead core maximum width wa (mm) | 4 | 4 | 4 | 4 | 4 | 4 | 4 | 4 | 4 | 4 | 4 |
| w1/w2 | 2.5 | 1.5 | 2.5 | 2.5 | 2.5 | 2.5 | 2.5 | 2.5 | 2.5 | 2.5 | 2.5 |
| La (mm) | 4 | 4 | 5 | 4 | 5 | 5 | 5 | 4 | 5 | 5 | 5 |
| Complex elastic modulus E^{∗} of rubber in core-below region | 2.8 | 2.8 | 3.5 | 2.8 | 3.5 | 3.5 | 3.5 | 2.8 | 2.8 | 3.5 | 3.5 |
| S/Sb (%) | 0.25 | 0.25 | 0.40 | 0.25 | 0.25 | 0.25 | 0.40 | 0.25 | 0.25 | 0.40 | 0.40 |
| B-A(mm) | 0.4 | 0.4 | 1.0 | 0.4 | 0.4 | 0.4 | 1.0 | 0.4 | 0.4 | 2.5 | 1.0 |
| Material/wire diameter (mm) of bead wire | Steel/0.7 | Steel/0.7 | Steel/0.9 | Steel/0.7 | Steel/0.7 | Steel/0.7 | Steel/0.7 | Steel/0.7 | Steel/0.7 | Steel/0.7 | Kevlar/0.9 |
| High-speed stability [5 points is maximum score, higher value is better] | 3.0 | 3.0 | 4.5 | 4.0 | 4.5 | 4.5 | 4.5 | 4.0 | 4.5 | 4.5 | 4.5 |
| Ride comfort [5 points is maximum score, higher value is better] | 3.2 | 3.2 | 4.3 | 3.5 | 3.3 | 4.3 | 4.3 | 3.5 | 3.3 | 4.3 | 4.3 |
| Fittability [higher score is better] | 100 | 102 | 104 | 98 | 98 | 104 | 102 | 102 | 106 | 106 | 105 |
| Rim detachment resistance [higher score is better] | 100 | 98 | 105 | 102 | 102 | 100 | 102 | 98 | 97 | 100 | 102 |

As a result of the tests, it is understood that various performance characteristics of the test tires of the Examples are improved as compared to those of the test tires of the Comparative Examples.

## Claims

1. A pneumatic tire (1) comprising: a pair of bead portions (4) in each of which a bead core (5) is embedded; and a carcass (6) including a carcass ply (6A) extending on and between the bead cores (5), wherein
in a tire meridian cross-section, the bead core (5) includes a bead wire (10) extending in a tire circumferential direction,
in a tire meridian cross-section, the bead core (5) includes a core outer portion (12) in which the bead wire (10) is stacked so as to form a tapered shape toward an outer side in a tire radial direction, and
a center line (14) that bisects a taper angle of the core outer portion (12) is inclined toward an outer side in a tire axial direction while extending toward the outer side in the tire radial direction,
**characterized in that**
the carcass ply (6A) includes a main body portion (6a) extending between the bead cores (5), and turned-up portions (6b) turned up around the bead cores (5) from the inner side to the outer side in the tire axial direction,
the main body portion (6a) and each of the turned-up portions (6b) form a closed region (6R) surrounding the bead core (5), by contact thereof at the outer side in the tire radial direction with respect to the bead core (5),
the closed region (6R) includes a first region (21a) occupied by the bead core (5), and a second region (21b) outward in the tire radial direction of the first region (21a), and
in a tire meridian cross-section, an area (Sa) of the second region (21b) is not less than 0.1 times an area (Sb) of the first region (21a).

2. The pneumatic tire (1) according to claim 1, wherein an angle (θ1) of the center line (14) relative to a line (n) along the tire radial direction is 5 to 25°.

3. The pneumatic tire (1) according to claim 1 or 2, wherein, in a tire meridian cross-section, the bead core (5) includes a core inner portion (13) that is located inward in the tire radial direction of the core outer portion (12) and in which the bead wire (10) is stacked so as to form a tapered shape toward an inner side in the tire radial direction.

4. The pneumatic tire (1) according to any one of claims 1 to 3, wherein
the bead core (5) has an inner end (5i) in the tire axial direction, an outer end (5e) in the tire axial direction, a bead core maximum width portion (15) connecting the inner and outer ends (5i, 5e), and an inner end (5a) in the tire radial direction, and
a ratio (Hmax/H) of a maximum width height (Hmax) that is a height in the tire radial direction from an intermediate position (15a) of the bead core maximum width portion (15) to the inner end (5a) in the tire radial direction, to a maximum height (H) in the tire radial direction of the bead core (5) is 20% to 80%.

5. The pneumatic tire (1) according to any one of claims 1 to 4, wherein
the bead core (5) has an inner end (5i) in the tire axial direction, an outer end (5e) in the tire axial direction, a bead core maximum width portion (15) connecting the inner and outer ends (5i, 5e), and an inner end (5a) in the tire radial direction, and
a distance (La) in the tire radial direction between an intermediate position (15a) of the bead core maximum width portion (15) and a bead bottom surface (4b) is not less than 1.5 times a maximum width height (Hmax) that is a height in the tire radial direction from the intermediate position (15a) of the bead core maximum width portion (15) to the inner end (5a) in the tire radial direction.

6. The pneumatic tire (1) according to any one of claims 1 to 5, wherein, in the bead portion (4), a rubber (16) having a complex elastic modulus (E^{∗}) not less than 3.0 MPa is disposed in a core-below region (20), wherein the core-below region (20) is a region that is between an inner end (5i) and an outer end (5e) in the tire axial direction of the bead core (5) and is inward in the tire radial direction with respect to the carcass ply (6A), with the complex elastic modulus values being measured in deformation mode tension according to the standard of JIS-K6394 under the conditions initial strain: 10%, amplitude: ±2%, frequency: 10 Hz, temperature: 70°C.

7. The pneumatic tire (1) according to claim 6, wherein, in a tire meridian cross-section, an area (S) of the core-below region (20) is not less than 30% of an area of the bead core (5).

8. The pneumatic tire (1) according to any one of claims 1 to 7, wherein
the carcass ply (6A) includes turned-up portions (6b) turned up around the bead cores (5) from the inner side to the outer side in the tire axial direction,
an outer rubber (17) is provided outward in the tire axial direction of each of the turned-up portions (6b), and
a rubber gauge (d1) of the outer rubber (17) at a position corresponding to an outer end (5b) in the tire radial direction of the bead core (5) is not greater than 2 times a rubber gauge (d2) of the outer rubber (17) at a position corresponding to an outer end (5e) in the tire axial direction of the bead core (5).

9. The pneumatic tire (1) according to any one of claims 1 to 8, wherein a difference (B-A) between a bead base diameter (B) of the pneumatic tire (1) and a rim diameter (A) of a normal rim (R) to which the pneumatic tire (1) is mounted is 0.5 to 1.5 mm.

10. The pneumatic tire (1) according to any one of claims 1 to 9, wherein
each of the turned-up portions (6b) has a turned-up portion profile (23) specified by a center line (6c) of a carcass cord, and
the turned-up portion profile (23) is convex inward in the tire axial direction, and a radius of curvature (R1) of a single circular arc determined from three points at an outer end (5e) in the tire axial direction of the bead core (5), an outer end (5b) in the tire radial direction of the bead core (5), and a position (5f) away from the outer end (5b) in the tire radial direction of the bead core (5) by a height (H) in the tire radial direction of the bead core (5) is not less than 1.0 times a maximum width (wa) of the bead core (5), wherein the height (H) is the maximum height (H) in the tire radial direction of the bead core (5) and wherein the maximum width (wa) of the bead core (5) is measured parallel to a virtual straight line (15c) connecting an inner end (5i) of the bead core (5) in the tire axial direction and an outer end (5e) of the bead core (5) in the tire axial direction.

## Patentansprüche

1. Luftreifen (1), umfassend: ein Paar Wulstabschnitte (4), in denen jeweils ein Wulstkern (5) eingebettet ist; und eine Karkasse (6) mit einer Karkasslage (6A), die sich auf und zwischen den Wulstkernen (5) erstreckt, wobei
der Wulstkern (5) in einem Reifenmeridianquerschnitt einen Wulstdraht (10) aufweist, der sich in einer Reifenumfangsrichtung erstreckt,
der Wulstkern (5) in einem Reifenmeridianquerschnitt einen Kernaußenabschnitt (12) umfasst, in dem der Wulstdraht (10) so gestapelt ist, dass er in Reifenradialrichtung zu einer Außenseite hin eine sich verjüngende Form bildet, und
eine Mittellinie (14), die einen Verjüngungswinkel des Kernaußenabschnitts (12) halbiert, in einer Reifenaxialrichtung zu einer Außenseite hin geneigt ist, während sie sich in der Reifenradialrichtung zu der Außenseite hin erstreckt,
**dadurch gekennzeichnet, dass**
die Karkasslage (6A) einen Hauptkörperabschnitt (6a) aufweist, der sich zwischen den Wulstkernen (5) erstreckt, und Umschlagabschnitte (6b), die um die Wulstkerne (5) von der Innenseite zur Außenseite in der Reifenaxialrichtung umgeschlagen sind,
der Hauptkörperabschnitt (6a) und jeder der Umschlagabschnitte (6b) einen geschlossenen Bereich (6R) bilden, der den Wulstkern (5) umgibt, indem er ihn an der Außenseite in der Reifenradialrichtung in Bezug auf den Wulstkern (5) berührt,
der geschlossene Bereich (6R) einen ersten Bereich (21a), der von dem Wulstkern (5) eingenommen wird, und einen zweiten Bereich (21b) umfasst, der sich in der Reifenradialrichtung des ersten Bereichs (21ä) nach außen erstreckt, und
in einem Reifenmeridianquerschnitt eine Fläche (Sa) des zweiten Bereichs (21b) nicht weniger als das 0,1-fache einer Fläche (Sb) des ersten Bereichs (21a) beträgt.

2. Luftreifen (1) nach Anspruch 1, wobei ein Winkel (θ1) der Mittellinie (14) relativ zu einer Linie (n) entlang der Reifenradialrichtung 5 bis 25° beträgt.

3. Luftreifen (1) nach Anspruch 1 oder 2, wobei der Wulstkern (5) in einem Reifenmeridianquerschnitt einen Kerninnenabschnitt (13) umfasst, der in der Reifenradialrichtung innen von dem Kernaußenabschnitt (12) angeordnet ist und in dem der Wulstdraht (10) so gestapelt ist, dass er in der Reifenradialrichtung zur Innenseite hin eine verjüngte Form bildet.

4. Luftreifen (1) nach einem der Ansprüche 1 bis 3, wobei
der Wulstkern (5) ein inneres Ende (5i) in der Reifenaxialrichtung, ein äußeres Ende (5e) in der Reifenaxialrichtung, einen Abschnitt maximaler Breite des Wulstkerns (15), der das innere und das äußere Ende (5i, 5e) verbindet, und ein inneres Ende (5a) in der Reifenradialrichtung aufweist, und
ein Verhältnis (Hmax/H) einer maximalen Breitenhöhe (Hmax), die eine Höhe in der Reifenradialrichtung von einer Zwischenposition (15a) des Abschnitts maximaler Breite des Wulstkerns (15) zum inneren Ende (5a) in der Reifenradialrichtung ist, zu einer maximalen Höhe (H) in der Reifenradialrichtung des Wulstkerns (5) 20 % bis 80 % beträgt.

5. Luftreifen (1) nach einem der Ansprüche 1 bis 4, wobei
der Wulstkern (5) ein inneres Ende (5i) in der Reifenaxialrichtung, ein äußeres Ende (5e) in der Reifenaxialrichtung, einen Abschnitt maximaler Breite des Wulstkerns (15), der das innere und das äußere Ende (5i, 5e) verbindet, und ein inneres Ende (5a) in der Reifenradialrichtung aufweist, und
ein Abstand (La) in der Reifenradialrichtung zwischen einer Zwischenposition (15a) des Abschnitts maximaler Breite des Wulstkerns (15) und einer Wulstbodenfläche (4b) nicht weniger als das 1,5-fache einer Maximalbreitenhöhe (Hmax) beträgt, die eine Höhe in der Reifenradialrichtung von der Zwischenposition (15a) des Abschnitts maximaler Breite des Wulstkerns (15) zum inneren Ende (5a) in der Reifenradialrichtung ist.

6. Luftreifen (1) nach einem der Ansprüche 1 bis 5, wobei in dem Wulstabschnitt (4) ein Gummi (16) mit einem komplexen Elastizitätsmodul (E*) von nicht weniger als 3,0 MPa in einem Unter-Kernbereich (20) angeordnet ist, wobei der Unter-Kernbereich (20) ein Bereich ist, der zwischen einem inneren Ende (5i) und einem äußeren Ende (5e) in der Reifenaxialrichtung des Wulstkerns (5) liegt und in der Reifenradialrichtung in Bezug auf die Karkasslage (6A) innen liegt, wobei der komplexe Elastizitätsmodul ein Wert ist, der gemäß dem Standard JIS-K6394 unter Verwendung eines von Iwamoto Seisakusho hergestellten Viskoelastizitätspektrometers unter den Bedingungen Anfangsdehnung: 10%, Amplitude: ±2%, Frequenz: 10 Hz, Temperatur: 70°C gemessen ist.

7. Luftreifen (1) nach Anspruch 6, wobei in einem Reifenmeridianquerschnitt eine Fläche (S) des Unter-Kernbereichs (20) nicht weniger als 30% einer Fläche des Wulstkerns (5) beträgt.

8. Luftreifen (1) nach einem der Ansprüche 1 bis 7, wobei
die Karkasslage (6A) Umschlagabschnitte (6b) umfasst, die um die Wulstkerne (5) von der Innenseite zur Außenseite in der Reifenaxialrichtung umgeschlagen sind,
ein Außengummi (17) in der Reifenaxialrichtung von jedem der Umschlagabschnitte (6b) vorgesehen ist, und
eine Gummidicke (d1) des Außengummis (17) an einer Position, die einem äußeren Ende (5b) in der Reifenradialrichtung des Wulstkerns (5) entspricht, nicht größer ist als das Zweifache einer Gummidicke (d2) des Außengummis (17) an einer Position, die einem äußeren Ende (5e) in der Reifenaxialrichtung des Wulstkerns (5) entspricht.

9. Luftreifen (1) nach einem der Ansprüche 1 bis 8, wobei eine Differenz (B-A) zwischen einem Wulstbasisdurchmesser (B) des Luftreifens (1) und einem Felgendurchmesser (A) einer normalen Felge (R), auf die der Luftreifen (1) aufgezogen ist, 0,5 bis 1,5 mm beträgt.

10. Luftreifen (1) nach einem der Ansprüche 1 bis 9, wobei
jeder der Umschlagabschnitte (6b) ein Umschlagabschnittsprofil (23) aufweist, das durch eine Mittellinie (6c) eines Karkasskords festgelegt ist, und
das Umschlagabschnittsprofil (23) in der Reifenaxialrichtung nach innen konvex ist, und ein Krümmungsradius (R1) eines einzelnen Kreisbogens, der von drei Punkten an einem äußeren Ende (5e) in der Reifenaxialrichtung des Wulstkerns (5), einem äußeren Ende (5b) in der Reifenradialrichtung des Wulstkerns (5) und einer Position (5f), die von dem äußeren Ende (5b) in der Reifenradialrichtung des Wulstkerns (5) um eine Höhe (H) in der Reifenradialrichtung des Wulstkerns (5) entfernt ist, bestimmt ist, nicht weniger als das 1,0-fache einer maximalen Breite (wa) des Wulstkerns (5) beträgt, wobei die Höhe (H) die maximale Höhe (H) des Wulstkerns (5) in der Reifenradialrichtung ist, und wobei die maximale Breite (wa) des Wulstkerns (5) parallel zu einer virtuellen Geraden (15c) gemessen ist, die ein inneres Ende (5i) des Wulstkerns (5) in der Reifenaxialrichtung und ein äußeres Ende (5e) des Wulstkerns (5) in der Reifenaxialrichtung verbindet.

## Revendications

1. Bandage pneumatique (1) comprenant : une paire de portions de talon (4) dans chacune desquelles une âme de talon (5) est noyée ; et une carcasse (6) qui inclut une nappe de carcasse (6A) s'étendant sur et entre les âmes de talon (5), dans lequel
dans une section transversale méridienne du pneumatique, l'âme de talon (5) inclut un fil de talon (10) qui s'étend dans une direction circonférentielle du pneumatique,
dans une section transversale méridienne du pneumatique, l'âme de talon (5) inclut une portion extérieure d'âme (12) dans laquelle le fil de talon (10) est empilé de manière à former une forme effilée vers un côté extérieur dans une direction radiale du pneumatique, et
une ligne centrale (14) qui coupe en deux un angle incliné de la portion extérieure d'âme (12) est inclinée vers un côté extérieur dans une direction axiale du pneumatique tout en s'étendant vers le côté extérieur dans la direction radiale du pneumatique,
**caractérisé en ce que**
la nappe de carcasse (6A) inclut une portion formant corps principal (6a) qui s'étend entre les âmes de talon (5), et des portions retroussées (6b) retroussées autour des âmes de talon (5) depuis le côté intérieur jusqu'au côté extérieur dans la direction axiale du pneumatique,
la portion formant corps principal (6a) et chacune des portions retroussées (6b) forment une région fermée (6R) qui entoure l'âme de talon (5), par contact de celle-ci au niveau du côté extérieur dans la direction radiale par rapport à l'âme de talon (5),
la région fermée (6R) inclut une première région (21a) occupée par l'âme de talon (5), et une seconde région (21b) à l'extérieur dans la direction radiale du pneumatique de la première région (21a), et
dans une section transversale méridienne du pneumatique, une aire (Sa) de la seconde région (21b) n'est pas inférieure à 0,1 fois une aire (Sb) de la première région (21a).

2. Bandage pneumatique (1) selon la revendication 1, dans lequel un angle (θ1) de la ligne centrale (14) relativement à une ligne (n) le long de la direction radiale du pneumatique est de 5 à 25°.

3. Bandage pneumatique (1) selon la revendication 1 ou 2, dans lequel, dans une direction transversale méridienne du pneumatique, l'âme de talon (5) inclut une portion intérieure d'âme (13) qui est située à l'intérieur dans la direction radiale du pneumatique de la portion extérieure d'âme (12) et dans laquelle le fils de talon (10) est empilé de manière à former une forme effilée vers un côté intérieur dans la direction radiale du pneumatique.

4. Bandage pneumatique (1) selon l'une quelconque des revendications 1 à 3, dans lequel
l'âme de talon (5) a une extrémité intérieure (5i) dans la direction axiale du pneumatique, une extrémité extérieure (5e) dans la direction axiale du pneumatique, une portion de largeur maximum d'âme de talon (15) qui connecte l'extrémité intérieure et l'extrémité extérieure (5i, 5e), et une extrémité intérieure (5a) dans la direction radiale du pneumatique, et
un rapport (Hmax/H) d'une hauteur de largeur maximum (Hmax) qui est une hauteur dans la direction radiale du pneumatique depuis une position intermédiaire (15a) de la portion de largeur maximum d'âme de talon (15) jusqu'à l'extrémité intérieure (5a) dans la direction radiale du pneumatique, sur une hauteur maximum (H) dans la direction radiale du pneumatique de l'âme de talon (5) est de 20 % à 80 %.

5. Bandage pneumatique (1) selon l'une quelconque des revendications 1 à 4, dans lequel
l'âme de talon (5) a une extrémité intérieure (5i) dans la direction axiale du pneumatique, une extrémité extérieure (5e) dans la direction axiale du pneumatique, une portion de largeur maximum d'âme de talon (15) qui connecte l'extrémité intérieure et l'extrémité extérieure (5i, 5e), et une extrémité intérieure (5a) dans la direction radiale pneumatique, et
une distance (La) dans la direction radiale du pneumatique entre une position intermédiaire (15a) de la portion de largeur maximum d'âme de talon (15) et une surface de fond de talon (4b) n'est pas inférieure à 1,5 fois une hauteur de largeur maximum (Hmax) qui est une hauteur dans la direction radiale du pneumatique depuis la position intermédiaire (15a) de la portion de largeur maximum d'âme de talon (15) jusqu'à l'extrémité intérieure (5a) dans la direction radiale du pneumatique.

6. Bandage pneumatique (1) selon l'une quelconque des revendications 1 à 5, dans lequel, dans la portion de talon (4), un caoutchouc (16) ayant un module d'élasticité complexe (E*) qui n'est pas inférieur à 3,0 MPa est disposé dans une région de dessous d'âme (20), la région de dessous d'âme (20) étant une région qui est entre une extrémité intérieure (5i) et une extrémité extérieure (5e) dans la direction axiale du pneumatique de l'âme de talon (5) et qui est à l'intérieur dans la direction radiale du pneumatique par rapport à la nappe de carcasse (6A),
les valeurs de module d'élasticité complexe étant mesurées dans un mode de déformation de tension en accord avec les standards de la norme industrielle japonaise JIS-K6394 dans les conditions suivantes : contrainte initiale : 10 % ; amplitude : ± 2 % ; fréquence : 10 Hz ; température : 70 °C.

7. Bandage pneumatique (1) selon la revendication 6, dans lequel, dans une section transversale méridienne du pneumatique, une aire (S) de la région de dessous d'âme (20) n'est pas inférieure à 30 % d'une aire de l'âme de talon (5).

8. Bandage pneumatique (1) selon l'une quelconque des revendications 1 à 7 dans lequel
la nappe de carcasse (6A) inclut des portions retroussées (6b) retroussées autour des âmes de talon (5) depuis le côté intérieur jusqu'au côté extérieur dans la direction axiale du pneumatique,
un caoutchouc extérieur (17) est prévu à l'extérieur dans la direction axiale du pneumatique de chacune des portions retroussées (6b), et
une jauge de caoutchouc (d1) du caoutchouc extérieur (17) à une position correspondant à une extrémité extérieure (5b) dans la direction radiale du pneumatique de l'âme de talon (5) n'est pas supérieure à 2 fois une jauge de caoutchouc (d2) du caoutchouc extérieur (17) à une position correspondant à une extrémité extérieure (5e) dans la direction axiale du pneumatique de l'âme de talon (5).

9. Bandage pneumatique (1) selon l'une quelconque des revendications 1 à 8, dans lequel une différence (B - A) entre un diamètre de base de talon (B) du bandage pneumatique (1) et un diamètre de jante (A) d'une jante normale (R) sur laquelle le bandage pneumatique (1) est monté est de 0,5 à 1,5 mm.

10. Bandage pneumatique (1) selon l'une quelconque des revendications 1 à 9, dans lequel
chacune des portions retroussées (6b) a un profil de portion retroussée (23) spécifié par une ligne centrale (6c) d'un câblé de carcasse, et
le profil de portion retroussée (23) est convexe vers l'intérieur dans la direction axiale du pneumatique, et un rayon de courbure (R1) d'un arc circulaire unique déterminé à partir de trois points au niveau d'une extrémité extérieure (5e) dans la direction axiale du pneumatique de l'âme de talon (5), d'une extrémité extérieure (5b) dans la direction radiale du pneumatique de l'âme de talon (5), et d'une position (5f) en éloignement de l'extrémité extérieure (5b) dans la direction radiale du pneumatique de l'âme de talon (5) à raison d'une hauteur (H) dans la direction radiale du pneumatique de l'âme de talon (5) n'est pas inférieur à 1,0 fois une largeur maximum (wa) de l'âme de talon (5), la hauteur (H) étant la hauteur maximum (H) dans la direction radiale du pneumatique de l'âme de talon (5), et la largeur maximum (wa) de l'âme de talon (5) étant mesurée parallèlement à une ligne droite virtuelle (15c) qui connecte une extrémité intérieure (5i) de l'âme de talon (5) dans la direction axiale du pneumatique et une extrémité extérieure (5e) de l'âme de talon (5) dans la direction axiale du pneumatique.
